# EUROPEAN PATENT APPLICATION

(11) **EP 4 611 377 A1**
(43) Date of publication of application: **03.09.2025**
(21) Application number: 24828720.3
(22) Date of filing: 19.12.2024
(51) Int. Cl.: H04N 21/466, H04N 21/45, H04N 21/482, H04N 21/431, H04N 21/434, H04N 21/81

(54) **ELECTRONIC DEVICE AND OPERATING METHOD THEREOF**

(30) Priority: 13.03.2024 KR 20240035427
(71) Applicant: Samsung Electronics Co., Ltd, Suwon-si, Gyeonggi-do 16677 (KR)
(72) Inventor: JEONG, Yoonyoung, Suwon-si, Gyeonggi-do 16677 (KR); LEE, Daehyun, Suwon-si, Gyeonggi-do 16677 (KR)
(74) Representative: Appleyard Lees IP LLP
(86) International application number: PCT/KR2024/020737
(87) International publication number: WO 2025/150738

(57) **Abstract**

A method of operating an electronic device is provided, including obtaining channel group information through a neural network trained on metadata information for a plurality of streaming channels whose channel numbers or channel identifiers, IDs, are changeable and viewing history information, generating a channel group according to the obtained channel group information, and updating the generated channel group when at least one of a channel number or a channel ID for at least one channel included in the generated channel group is changed.

## Description

### Technical Field

The disclosure relates to an electronic device and an operation method of the electronic device. More particularly, the disclosure relates to an electronic device capable of generating a channel group, and an operation method of the electronic device.

### Background Art

Recently, more and more broadcasts through various channels are provided by broadcast streaming applications in addition to fixed channels provided by terrestrial broadcasting.

Broadcast streaming applications may assign one channel per program, and have a characteristic whereby a channel number assigned to each channel, or a unique channel ID assigned to each channel, can change irregularly.

Broadcast streaming applications may have a large number of channels because one channel can be allocated per program. In broadcast streaming applications, channels may be deleted or newly generated frequently, and, because channel numbers or channel IDs may change irregularly, it may be difficult for users to search for channels.

Issues can arise as changed channel numbers or channel IDs may refer to an incorrect channel or a channel that no longer exists, which can lead to technical problems as well as an unreliable user interface.

Therefore, research is needed on methods capable of facilitating users' channel searching in order to efficiently utilize broadcast streaming applications.

### Disclosure

### Technical Solution

A method of operating an electronic device, according to an embodiment of the disclosure, may include obtaining channel group information through a neural network trained on metadata information for a plurality of streaming channels whose channel numbers or channel identifiers (IDs) are changeable and viewing history information.

The method of operating an electronic device, according to an embodiment of the disclosure, may further include generating a channel group according to the obtained channel group information.

The method of operating an electronic device, according to an embodiment of the disclosure, may include updating the generated channel group when at least one of a channel number or a channel ID for at least one channel included in the generated channel group is changed.

An electronic device according to an embodiment of the disclosure may include a memory that stores one or more instructions.

The electronic device according to an embodiment of the disclosure may include one or more processors configured to execute the one or more instructions stored in the memory.

The one or more processors may be configured to execute the one or more instructions to obtain channel group information through a neural network trained based on metadata information for a plurality of streaming channels whose channel numbers or channel identifiers (IDs) are changeable and viewing history information.

The one or more processors may be further configured to execute the one or more instructions to generate a channel group according to the obtained channel group information.

The one or more processors may be further configured to execute the one or more instructions to update the generated channel group when at least one of the channel number or channel ID for at least one of the channels included in the generated channel group is changed.

A non-transitory computer-readable recording medium according to an embodiment of the disclosure may have recorded thereon a computer program, which, when executed by a computer, performs a method of operating an electronic device, the method including obtaining channel group information through a neural network trained based on metadata information for a plurality of streaming channels whose channel numbers or channel identifiers (IDs) are changeable and viewing history information.

The non-transitory computer-readable recording medium according to an embodiment of the disclosure may have recorded thereon a computer program, which, when executed by a computer, performs a method of operating an electronic device, the method including generating a channel group according to the obtained channel group information.

The non-transitory computer-readable recording medium according to an embodiment of the disclosure may have recorded thereon a computer program, which, when executed by a computer, performs a method of operating an electronic device, the method including updating the generated channel group when at least one of a channel number or a channel ID for at least one channel included in the generated channel group is changed.

### Description of Drawings

FIG. 1 is a diagram illustrating an example of a plurality of streaming channels provided by a broadcast streaming application.
FIG. 2 is a block diagram illustrating a method, performed by an electronic device, of generating a channel group by using a recommendation model, according to an embodiment of the disclosure.
FIG. 3 is a diagram illustrating an example in which an electronic device provides a generated channel group, according to an embodiment of the disclosure.
FIG. 4 is a flowchart of an operation method of an electronic device, according to an embodiment of the disclosure.
FIG. 5 is a diagram illustrating an example of a method, performed by an electronic device, of obtaining channel group information by using artificial intelligence (AI), according to an embodiment of the disclosure.
FIG. 6 is a diagram illustrating an example of a channel group generated by the electronic device according to an embodiment of the disclosure.
FIG. 7 is a diagram illustrating an example of a method, performed by an electronic device, of obtaining channel group information by using a server, according to an embodiment of the disclosure.
FIG. 8 is a diagram illustrating an example of a method, performed by an electronic device, of obtaining channel group information by using on-device AI, according to an embodiment of the disclosure.
FIG. 9 is a diagram illustrating an example in which an electronic device regenerates a channel group by reflecting a feedback of a user, according to an embodiment of the disclosure.
FIG. 10 is a flowchart of an operation method of an electronic device, according to an embodiment of the disclosure.
FIG. 11 is a diagram illustrating an example in which an electronic device regenerates a channel group, based on a feedback of a user, according to an embodiment of the disclosure.
FIG. 12 is a diagram illustrating an example in which an electronic device provides an advertisement in a streaming application, according to an embodiment of the disclosure.
FIG. 13 is a block diagram of an electronic device according to an embodiment of the disclosure.
FIG. 14 is a block diagram for explaining in detail the configuration of the electronic device according to an embodiment of the disclosure.

### Mode for Invention

Embodiments of the disclosure are described in detail herein with reference to the accompanying drawings so that this disclosure may be easily performed by one of ordinary skill in the art to which the disclosure pertains.

The terms used in the present specification are merely used to describe particular embodiments, and are not intended to limit the scope of the disclosure.

Throughout the specification, when an element is referred to as being "connected" or "coupled" to another element, it can be directly connected or coupled to the other element, or can be electrically connected or coupled to the other element with intervening elements interposed therebetween.

The use of the terms "a" and "an" and "the" and similar referents in the context of describing the disclosure (especially in the context of the following claims) are to be construed to cover both the singular and the plural. Also, the steps of all methods described herein can be performed in any suitable order unless otherwise indicated herein or otherwise clearly contradicted by context. The expression "according to an embodiment" used in the entire disclosure does not necessarily indicate the same embodiment.

Embodiments of the disclosure may be described in terms of functional block components and various processing steps. Some or all of these functional blocks may be implemented using various numbers of hardware and/or software configurations that perform specific functions. For example, functional blocks according to the disclosure may be realized by one or more microprocessors or by circuit components for a predetermined function. For example, the functional blocks of the disclosure may be implemented in various programming or scripting languages. The functional blocks may be implemented as algorithms executed in one or more processors. The disclosure may employ the conventional art for electronic configuration, signal processing, and/or data processing, for example. The words "mechanism," "element," "means," and "configuration" are used broadly and are not limited to mechanical or physical embodiments.

Furthermore, the connecting lines or connectors between components shown in the various figures presented are intended to represent exemplary functional relationships and/or physical or logical couplings between the components. In an actual device, a connection between components may be represented by various functional connections, physical connections, or circuit connections that are replaceable or added.

The terms "unit", "-er (-or)", and "module" when used in this specification refers to a unit in which at least one function or operation is performed, and may be implemented as hardware, software, or a combination of hardware and software.

The expression "at least one of A or B" or "at least one of A, or B" when used in this specification refers to including either A, B, or both A and B. Similarly, the expression "at least one of a, b or c" when used in this specification refers to only a, only b, only c, both a and b, both a and c, both b and c, or all of a, b, and c.

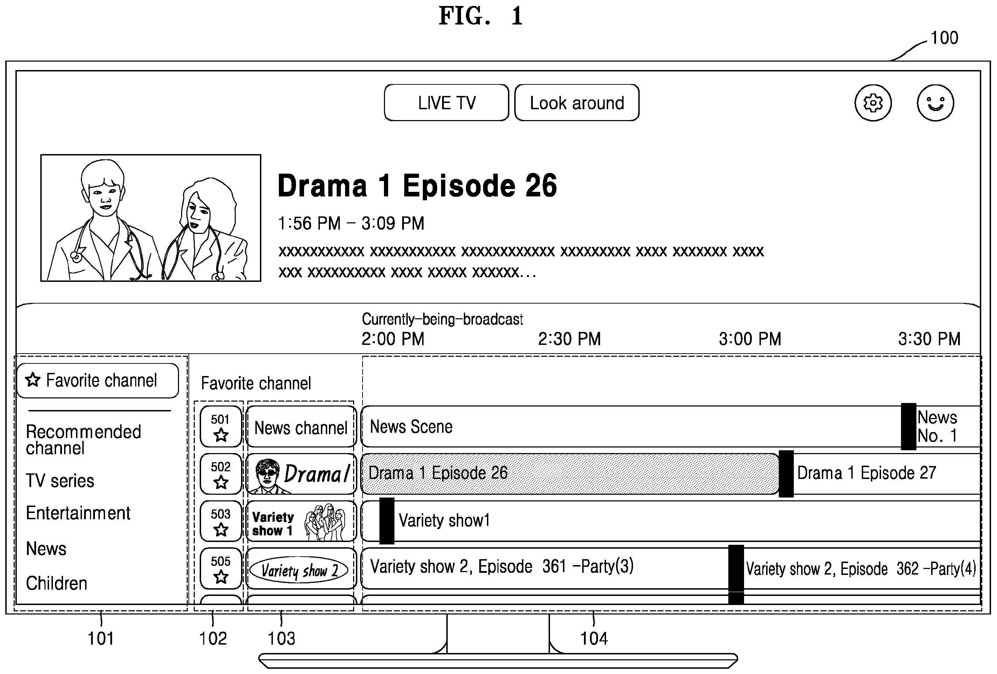

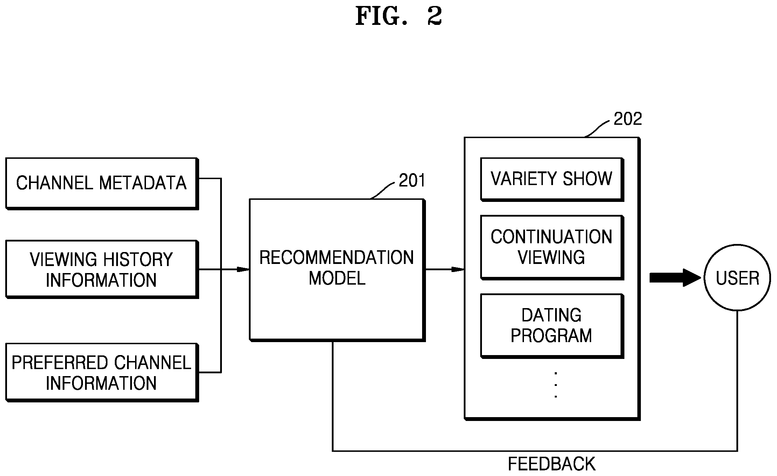

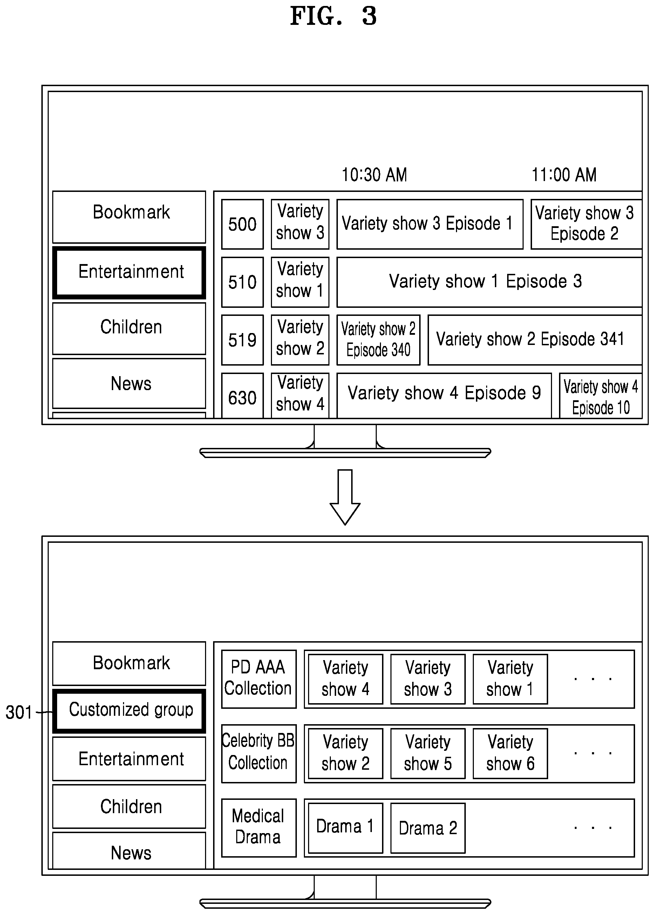

FIG. 1 is a diagram illustrating an example of a plurality of streaming channels provided by a broadcast streaming application, FIG. 2 is a diagram illustrating a method, performed by an electronic device 100, of generating a channel group by using a recommendation model, according to an embodiment of the disclosure, and FIG. 3 is a diagram illustrating an example of providing a channel group generated by an electronic device, according to an embodiment of the disclosure.

The electronic device 100 may provide broadcasts on various channels other than fixed channels provided by terrestrial waves through various broadcast streaming applications.

In the disclosure, a "channel", which is a channel provided by such a broadcast streaming application, may refer to a broadcast transmission channel that provides a program or consecutively provides programs determined by a content provider.

A channel according to an embodiment of the disclosure may be opened and closed freely by an application operator or a content provider.

The channel according to an embodiment of the disclosure may have a channel number assigned to the channel and a unique channel ID, and the channel number and the channel ID may be changed in real time by the content provider.

According to an embodiment of the disclosure, a plurality of streaming channels may include terrestrial broadcast channels and IPTV channels received through separate receivers, such as a tuner or an HDMI.

In the disclosure, the electronic device 100 may be a smart TV, but this is merely an example. The electronic device 100 may be implemented in various ways.

In particular, the electronic device 100 may be implemented as an electronic device 100 including a large video output interface, such as a TV. However, embodiments of the disclosure are not limited thereto. The electronic device 100 may be fixed or movable, and may be a digital broadcast receiver capable of digital broadcasting reception.

According to an embodiment of the disclosure, the electronic device 100 may be implemented as a device that performs image outputting as a function while performing another function.

The electronic device 100 according to an embodiment of the disclosure may be implemented as various types, such as a tablet PC, a smartphone, a digital camera, a camcorder, a laptop computer, a smart TV, a netbook computer, a desktop computer, an e-book terminal, a video phone, a digital broadcast terminal, personal digital assistants (PDAs), a portable multimedia player (PMP), a navigation device, a wearable device, a smart refrigerator, and other home appliances.

The electronic device 100 may have a built-in display, but embodiments of the disclosure are not limited thereto. The electronic device 100 may be implemented as a type of device that operates by being connected to an external display even when it does not have a built-in display.

For example, the electronic device 100 may be implemented as a type of device that outputs an image to a separate external display via a video or audio output port, without a display, like an STB (Set Top Box), or with a simple display for notifications, etc.

In this case, the electronic device 100 may include an output port for outputting a video or audio signal to a display. The output port may be of a type capable of transmitting a video signal and an audio signal simultaneously, such as an HDMI, a DP, or a thunderbolt, or may be of a type having separate ports that transmit a video signal and an audio signal separately.

According to an embodiment of the disclosure, the electronic device 100 may transmit a video or audio signal via wired or wireless communication.

The electronic device 100 may be implemented as not only an electronic device having a flat display but also an electronic device having a curved display having a curvature or a flexible electronic device with an adjustable curvature. An output resolution of the electronic device 100 may be, for example, a high definition (HD), a full HD, an ultra HD, or a resolution that is clearer than an ultra HD.

FIG. 1 illustrates an example of a plurality of streaming channels provided by the electronic device 100 through a broadcast streaming application.

The plurality of streaming channels may have unique channel numbers 102, such as 501, 502, 503, and 504, and channel names 103, such as News Channel, Drama 1, Variety Show 1, and Variety Show 2.

The plurality of streaming channels may have unique channel IDs. According to an embodiment of the disclosure, the channel IDs may be the same as the channel names 103, such as News Channel, Drama 1, Variety Show 1, and Variety Show 2. According to an embodiment of the disclosure, the channel ID may be a ID determined by a content provider different from the channel name.

In the embodiment of FIG. 1, channel 501 may be a channel that consecutively broadcasts programs included in a category News Channel. The programs included in the category News Channel may be, for example, news programs such as News Scene and News No. 1.

In the embodiment of FIG. 1, channel 502 may be a channel that continuously broadcasts a drama Drama 1 from the first episode to the last episode, channel 503 may be a channel that continuously broadcasts an entertainment program Variety Show 1 from the first episode to the last episode, and channel 504 may be a channel that continuously broadcasts an entertainment program Variety Show 2.

According to an embodiment of the disclosure, a broadcast streaming application may provide channels stored by a user as "favorite channels", e.g. in a favorite channel menu among menus 101.

According to an embodiment of the disclosure, a broadcast streaming application may provide a channel broadcast schedule 104 for each channel.

However, because there are many types of channels and a large number of channels, channels may be newly generated or terminated, and channel numbers or channel IDs may change, it may be difficult for users to directly manage the channels included in "Favorite Channels".

FIG. 2 is a block diagram illustrating a method, performed by an electronic device, of generating a channel group by using a recommendation model, according to an embodiment of the disclosure.

The electronic device 100 according to an embodiment of the disclosure may obtain channel group information 202 by inputting metadata information for a plurality of streaming channels, viewing history information, and preferred channel information into a recommendation model 201.

The electronic device 100 according to an embodiment of the disclosure may obtain the channel group information 202 customized for a user, by inputting the metadata information for the plurality of streaming channels, viewing history information of the user, and preferred channel information of the user into the recommendation model 201.

According to an embodiment of the disclosure, the metadata information for the plurality of streaming channels may include at least one of broadcaster information, performer information, genre information, or information about the length of content. However, the metadata information for the plurality of streaming channels is not limited thereto, and may include various types of information about the channels.

The viewing history information may include a time period taken for the user to watch each of the plurality of streaming channels, a time period taken to watch each of the plurality of streaming channels, session information, etc. The electronic device 100 may utilize detailed session information, such as how long each channel was watched and how long it took to watch it again, rather than simply considering only the total viewing time for each channel.

According to an embodiment of the disclosure, the user may refer to a user who uses the same device. In this case, the electronic device 100 may obtain, as the viewing history information, viewing history indicating that a program was watched using the same device.

According to an embodiment of the disclosure, the user may refer to a user who uses the same broadcast streaming application account. In this case, the electronic device 100 may obtain, as the viewing history information, viewing history indicating that a program was watched through the same account.

According to an embodiment of the disclosure, the user may refer to an individual identified through facial recognition via a camera, voice recognition via a voice, motion recognition via a promised gesture input, etc. In this case, the electronic device 100 may obtain, as the viewing history information, viewing history indicating that the individual identified through any of the aforementioned various methods watched a program. According to an embodiment of the disclosure, when a plurality of people watch a program together, the electronic device 100 may update viewing history information of each of the plurality of people. According to an embodiment of the disclosure, the electronic device 100 may not store viewing history for unidentifiable individuals. There may be various ways to identify an individual, and embodiments of the disclosure are not limited to those described above.

According to an embodiment of the disclosure, the viewing history information may be pre-processed information. For example, when the time taken for one session of watching one program is less than 3 minutes, the electronic device 100 may exclude session information of the session from the viewing history information, because the session may be watching while the user is switching channels or briefly staying on a channel that was not of interest. In addition, the electronic device 100 may utilize the viewing history information after performing necessary preprocessing.

The electronic device 100 may utilize the user's viewing history information to ascertain, for example, the user's preferred genre, the user's preferred performer, the user's preferred channel, and a preferred viewing time zone for each channel. The ascertained information may play an important role when the recommendation model 201 provides results customized for the user.

According to an embodiment of the disclosure, the electronic device 100 may utilize the user's viewing history information to determine which channel the user prefers, which channel the user watches for a long time without switching channels, and whether a program streamed on the channel has particular characteristics, thereby determining how the recommendation model 201 assigns a weight to each input value.

According to an embodiment of the disclosure, the electronic device 100 may utilize the viewing history information to generate a channel group that allows the user to continue watching programs that the user stopped watching in the middle.

The preferred channel information may refer to information about channels entered as preferred channels or favorite channels.

The preferred channel information of the user may refer to information about channels that the user selected as preferred after personally watching the channels.

According to an embodiment of the disclosure, when the user has not entered a channel as a preferred channel or a favorite channel, the preferred channel information of the user may not exist.

According to an embodiment of the disclosure, the recommendation model 201 may be a model that receives, as an input, the metadata information for the plurality of streaming channels, the viewing history information of the user, and the preferred channel information of the user and outputs channel group information.

According to an embodiment of the disclosure, the recommendation model 201 may be a model that receives, as an input, the metadata information for the plurality of streaming channels and the viewing history information of the user and outputs channel group information.

According to an embodiment of the disclosure, the recommendation model 201 may be an artificial intelligence (AI) model. This will be described in detail later.

According to an embodiment of the disclosure, the channel group information may refer to channel group information customized for the user. The channel group information customized for the user may refer to information about at least one channel group generated by categorizing a plurality of recommended channels that the user is expected to prefer. The electronic device 100 may assign an appropriate channel group name, such as entertainment, news collection, a program featuring singer A, continuation viewing, or a dating program, to a channel group that categorizes a plurality of recommended channels that are expected to be preferred by the user.

In the embodiment of FIG. 2, the channel group information may include entertainment, continuation viewing, a dating program, etc. The entertainment may refer to a channel group including at least one channel that streams an entertainment program, the continuation viewing may refer to a channel group including at least one channel that streams a program currently-being watched by a user, and the dating program may refer to a channel group including at least one channel that streams a dating entertainment program among entertainment programs.

The channel group 202 may be determined without limitations on the genre or scope.

According to an embodiment of the disclosure, a channel group may be about a specific broadcaster, producer, or writer. In this case, the channel group may be a channel group including at least one channel that streams a program featured, directed, or written by a particular person.

According to an embodiment of the disclosure, the electronic device 100 may obtain channel group information to generate the channel group 202 customized for the user and provide the same to the user.

According to an embodiment of the disclosure, the electronic device 100 may obtain the channel group information from a server.

According to an embodiment of the disclosure, the electronic device 100 may receive feedback about the recommendation model 201 from the user and reflect the feedback in the recommendation model 201 to update the recommendation model 201. This will be described in detail later.

FIG. 3 is a diagram illustrating an example in which an electronic device provides a generated channel group, according to an embodiment of the disclosure.

According to an embodiment of the disclosure, the electronic device 100 may generate a channel group by using the recommendation model 201, and may provide the generated channel group by inserting the generated channel group into a menu of a streaming application.

According to an embodiment of the disclosure, the electronic device 100 may display generated channel groups on a special tab.

According to an embodiment of the disclosure, the electronic device 100 may provide the generated channel groups to a user and then may regroup or change the generated channel groups according to the user's input.

According to an embodiment of the disclosure, the electronic device 100 may provide the generated channel groups to the user and then may update the generated channel groups according to the user's input.

The channel groups generated in the embodiment of FIG. 3 were inserted into the menu in the form of a customized group 301. The customized group 301 includes three channel groups: PD AAA Collection, Specific Celebrity Collection, and Medical Drama. Among the generated channel groups, the PD AAA Collection may include channels that consecutively stream Variety Show 4, Variety Show 3, and Variety Show 1, among the programs directed by a specific PD called AAA. Among the generated channel groups, the celebrity BB Collection may include channels that consecutively stream Variety Show 2, Variety Show 5, and Variety Show 6, among the programs featuring comedian celebrity BB. Among the generated channel groups, the Medical Drama may include channels that consecutively stream medical dramas, such as Drama 1 and Drama 2.

According to an embodiment of the disclosure, the electronic device 100 may facilitate access to channels that suit the user's taste, by displaying, through the streaming application's menu, the channel groups generated using the recommendation model 201.

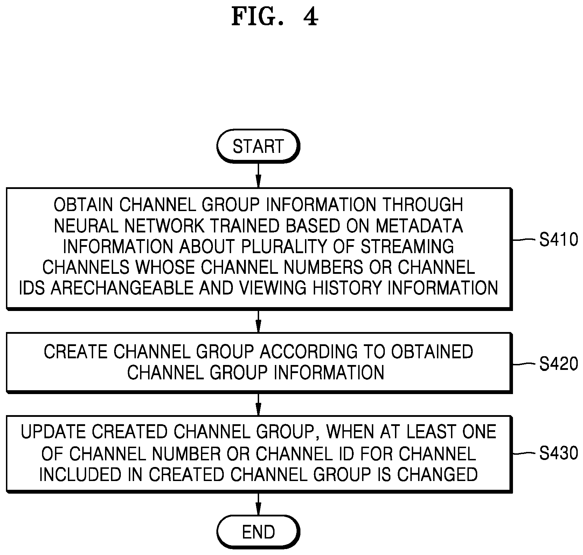

FIG. 4 is a flowchart of an operation method of the electronic device 100, according to an embodiment of the disclosure.

Referring to FIG. 4, the electronic device 100 according to an embodiment of the disclosure may obtain channel group information through a neural network trained on the metadata information for the plurality of streaming channels whose channel numbers or channel IDs may be changed and the viewing history information (operation S410).

The electronic device 100 according to an embodiment of the disclosure may obtain channel group information customized for a user, through a neural network trained based on the metadata information for the plurality of streaming channels whose channel numbers or channel IDs may be changed and the viewing history information.

The electronic device 100 according to an embodiment of the disclosure may obtain the channel group information through a neural network present in a server.

The electronic device 100 according to an embodiment of the disclosure may obtain the channel group information through a neural network stored in the electronic device 100.

According to an embodiment of the disclosure, the user's viewing history information may include viewing time information for the plurality of streaming channels.

According to an embodiment of the disclosure, the electronic device 100 may delete, from the user's viewing history information, viewing information indicating that a viewing time is less than a preset time.

According to an embodiment of the disclosure, the neural network may be trained based on not only the metadata information for the plurality of streaming channels and the viewing history information of the user but also the preferred channel information of the user, and may output channel group information.

The electronic device 100 according to an embodiment of the disclosure may generate a channel group according to the obtained channel group information (operation S420).

The electronic device 100 according to an embodiment of the disclosure may generate a channel group customized for the user according to the obtained channel group information.

According to an embodiment of the disclosure, the channel group may be generated based on a channel ID assigned to each channel, or based on a channel number assigned to each channel.

The electronic device 100 according to an embodiment of the disclosure may stream a channel selected according to a user input of selecting one from the channels included in the generated channel group.

The electronic device 100 according to an embodiment of the disclosure may display the channel group generated like the customized group 301 of FIG. 3 to the user by inserting the channel group into a menu.

The electronic device 100 according to an embodiment of the disclosure may update the generated channel group, when at least one of a channel number or a channel ID for at least one channel included in the generated channel group is changed (operation S430).

Under a broadcast streaming application environment, the channel number or the channel ID may be changed irregularly.

Because a channel group is generated based on a channel ID assigned to each channel or based on a channel number assigned to each channel, when at least one of the channel number or the channel ID changes, the channel group needs to be updated.

The electronic device 100 according to an embodiment of the disclosure may obtain information about each of the program currently being streamed on the plurality of streaming channels and a program to be streamed next to each of the programs currently being streamed, by using electronic program guide (EPG) data. The electronic device 100 may identify whether channel numbers or channel IDs assigned to the plurality of streaming channels have changed, by comparing the characteristics of each of the programs currently being streamed with the characteristics of the program to be streamed next to each of the programs.

In the disclosure, the EPG data may refer to program schedule data for each of the plurality of streaming channels.

According to an embodiment of the disclosure, when the characteristics of the programs currently being streamed on each channel are different from the characteristics of programs to be streamed next to the programs currently being streamed, the electronic device 100 may identify that the channel numbers or the channel IDs have changed. For example, when a program to be streamed next to a currently-being-streamed program is not the same program as the currently-being-streamed program on a channel where the same program is continuously broadcast, the electronic device 100 may identify that the channel numbers or the channel IDs have changed. According to an embodiment of the disclosure, the electronic device 100 may compare the program name of the currently-being-streamed program with the program name of the program which is to be streamed next to the currently-being-streamed program.

According to an embodiment of the disclosure,the electronic device 100 may identify whether the channel numbers or channel IDs assigned to the plurality of streaming channels have changed, based on each of the programs currently being streamed and the next program to be streamed.

According to an embodiment of the disclosure, when a channel group is generated based on the channel ID assigned to each channel, even when a channel number is changed and accordingly a channel that was previously visible on an initial screen is pushed to the back and displayed, the generated channel group is not affected, so the generated channel group may not need to be updated.

According to an embodiment of the disclosure, when a channel group is generated based on a channel ID assigned to each channel and the channel ID is changed, the electronic device 100 according to an embodiment of the disclosure may reflect the change in the generated channel group by updating metadata information for the channel with the changed channel ID and regenerating the channel group.

According to an embodiment of the disclosure, the case where the channel ID is changed may include a case in which a content provider for the channel is changed.

According to an embodiment of the disclosure, when a channel group is generated based on a channel number assigned to each channel, even when a channel ID is changed, the generated channel group is not affected, so the generated channel group may not need to be updated.

According to an embodiment of the disclosure, when a channel group is generated based on a channel number assigned to each channel and the channel number is changed, the electronic device 100 according to an embodiment of the disclosure may reflect the change in the generated channel group by immediately regenerating the channel group.

According to an embodiment of the disclosure, the electronic device 100 may regenerate or update the channel group at different frequency according to whether the channel group is generated based on the channel number or a channel ID.

The electronic device 100 according to an embodiment of the disclosure may set different update cycles for different channel groups, based on the characteristics of each generated channel group.

The electronic device 100 according to an embodiment of the disclosure may regenerate a channel group whenever the program schedule of the entire channel list changes.

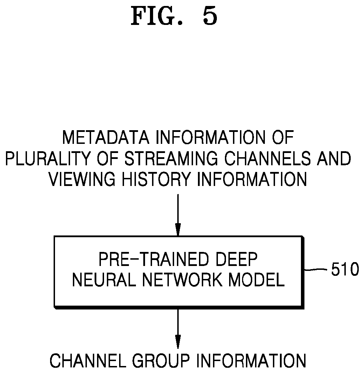

FIG. 5 is a diagram illustrating an example of a method, performed by the electronic device 100, of obtaining channel group information by using artificial intelligence (AI), according to an embodiment of the disclosure.

The electronic device 100 according to an embodiment of the disclosure may obtain channel group information through a neural network trained based on metadata information for a plurality of streaming channels whose channel numbers or channel IDs are changeable and viewing history information of a user.

The Al, which is a computer system that implements human-level intelligence, trains itself, and increases a recognition rate the more the Al is used. The Al includes a machine learning (deep learning) technology of using an algorithm that classifies/learns the features of pieces of input data by itself, and element technologies of mimicking functions, such as recognition and determination by human brains, by utilizing a machine learning algorithm.

For example, the element technologies may include at least one of linguistic understanding technology that recognizes human language/text, visual understanding technology that recognizes objects like human vision, deduction/prediction that logically performs deduction and prediction by determining information, knowledge representation that processes human experience information as knowledge data, vehicle's autonomous traveling, or operation control for controlling a motion of a robot.

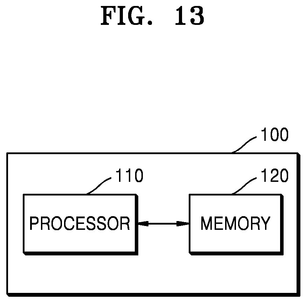

A function related to Al according to an embodiment of the disclosure may be operated through a processor 110 and a memory 120 of FIG. 13. The processor 110 may be implemented as one or a plurality of processors. The one or plurality of processors may be a general-purpose processor such as a central processing unit (CPU), an application processor (AP), or a digital signal processor (DSP), a graphicsonly processor such as a graphics processing unit (GPU) or a vision processing unit (VPU), or an AI-only processor such as a neural processing unit (NPU). The one or plurality of processors 110 control to process input data, according to a predefined operation rule or Al model stored in the memory 120. Alternatively, when the one or plurality of processors 110 are Al-only processors, the AI-only processors may be designed in a hardware structure specialized for processing a specific Al model.

The predefined operation rule or Al model is characterized in that it is generated through learning. Here, being created through learning means that a basic Al model is trained using a plurality of training data by a learning algorithm, so that a predefined operation rule or Al model set to perform desired characteristics (or a desired purpose) is created. Such learning may be performed in the electronic device 100 itself on which Al according to the disclosure is performed, or may be performed through a separate server and/or system. Examples of the learning algorithm include, but are not limited to, supervised learning, unsupervised learning, semi-supervised learning, or reinforcement learning.

The Al model may be composed of a plurality of neural network layers. Each of the plurality of neural network layers has a plurality of weight values, and performs a neural network operation through an operation between an operation result of a previous layer and the plurality of weight values. An activation function may be used to compute the output of nodes in a layer based on the inputs and the weight values. Examples of well-known activation functions that may be used by embodiments include Sigmoid, Tanh and Rectified Linear Unit. The plurality of weight values of the plurality of neural network layers may be optimized by a learning result of the Al model. For example, the plurality of weight values may be updated so that a loss value or a cost value obtained from the Al model is reduced or minimized during a learning process.

In an embodiment using a deep learning algorithm, the processor 110 may obtain the channel group information by using a pre-trained deep neural network model 510.

The pre-trained deep neural network model 510 may be an Al model trained through learning, the Al model obtaining, as an input, the metadata information for the plurality of streaming channels and the viewing history information of the user and outputting the channel group information.

The pre-trained deep neural network model 510 may be an Al model trained through learning, the Al model obtaining, as an input, the metadata information for the plurality of streaming channels, the viewing history information of the user, and the preferred channel information of the user and outputting the channel group information.

The pre-trained deep neural network model 510 may be, for example, a convolutional neural network (CNN) model. However, embodiments of the disclosure are not limited thereto, and the pre-trained deep neural network model 510 may be a well-known Al model including at least one of a Recurrent Neural Network (RNN), a Restricted Boltzmann Machine (RBM), a Deep Belief Network (DBN), a Bidirectional Recurrent Deep Neural Network (BRDNN), or Deep Q-Networks.

The electronic device 100 may output channel group information customized for the user by using any of the other various machine learning algorithms.

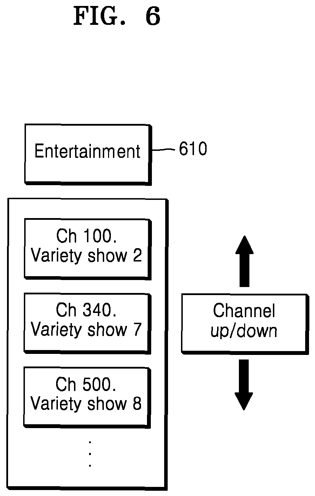

FIG. 6 is a diagram illustrating an example of a channel group generated by the electronic device 100 according to an embodiment of the disclosure.

The channel group generated by the electronic device 100 according to an embodiment of the disclosure may be a channel group that streams programs belonging to an "entertainment" category.

The electronic device 100 according to an embodiment of the disclosure may generate a channel group 610 named "Entertainment" including a channel numbered 100 that continuously streams an entertainment program "Variety Show 2," a channel numbered 340 that continuously streams an entertainment program "Variety Show 7," and a channel numbered 500 that continuously streams an entertainment program "Variety Show 8," and may display the channel group 610 on a menu.

When a channel group "Entertainment" is selected in a menu of a broadcast streaming application, the electronic device 100 according to an embodiment of the disclosure may control channel switching to be possible only within the channel group "Entertainment". In this case, channel up/down may only be done within the channel group.

When the channel group "Entertainment" is selected in the menu of the broadcast streaming application, the electronic device 100 according to an embodiment of the disclosure may control channel switching to be possible only within the channels included in the channel group "Entertainment", and may control numeric keys to be not operated.

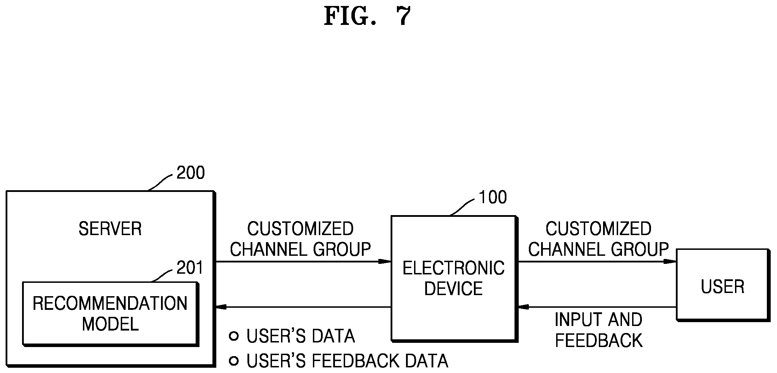

FIG. 7 is a diagram illustrating an example of a method, performed by the electronic device 100, of obtaining channel group information by using a server, according to an embodiment of the disclosure.

A system according to the embodiment of FIG. 7 may include a server 200 and the electronic device 100.

In the embodiment of FIG. 7, the server 200 may obtain feedback data of a user, user data, etc. from the electronic device 100. According to an embodiment of the disclosure, the user data transmitted by the electronic device 100 to the server 200 may include viewing history information of the user and preferred channel information of the user for a plurality of channels provided by a streaming application.

The server 200 may output channel group information by inputting the obtained user data into the recommendation model 201 stored in the server 200, and may transmit the output channel group information to the electronic device 100.

According to an embodiment of the disclosure, metadata information and EPG data for the plurality of channels provided by the streaming application may exist on the server 200.

According to an embodiment of the disclosure, the metadata information and the EPG data for the plurality of channels provided by the streaming application may be stored in the electronic device 100, and may be transmitted to the server 200 by the electronic device 100.

According to an embodiment of the disclosure, the recommendation model 201 may be the same as the recommendation model described above with reference to FIGS. 1 through 4.

In a system according to an embodiment of the disclosure, the recommendation model 201 may be trained by the server 200, and may be executed to thereby reduce a burden on the electronic device 100.

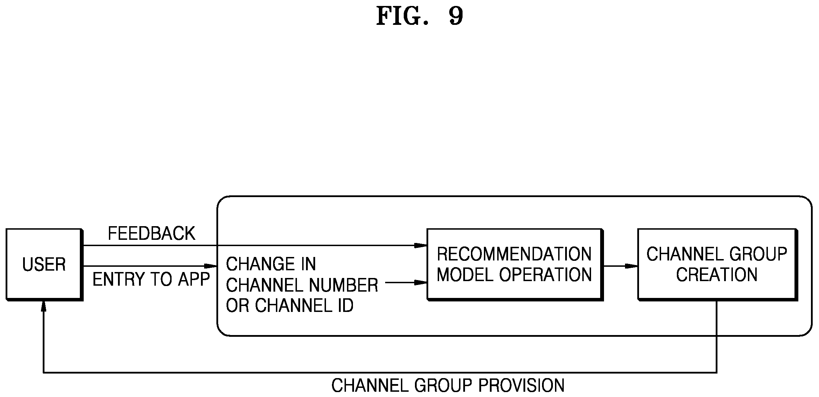

According to an embodiment of the disclosure, the server 200 may update the recommendation model 201 by using the user's feedback data received from the electronic device 100. Details thereof will be described later with reference to FIGS. 9 through 11.

According to an embodiment of the disclosure, the electronic device 100 may obtain channel group information customized for the user from the server 200, and may generate a channel group by using the obtained channel group information.

According to an embodiment of the disclosure, the electronic device 100 may provide the generated channel group to the user according to a method, such as, by inserting the generated channel group into the menu of the broadcast streaming application.

According to an embodiment of the disclosure, the electronic device 100 may update the recommendation model 201 stored in the server 200, by obtaining a feedback for the provided channel group from the user and transmitting the feedback to the server 200.

Because the embodiment of FIG. 7 is only an example, data transmitted and received by the server 200 and the electronic device 100 may vary according to embodiments.

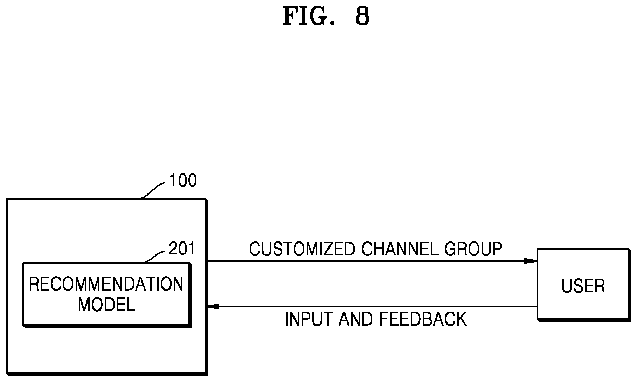

FIG. 8 is a diagram illustrating an example of a method, performed by the electronic device 100, of obtaining channel group information by using on-device Al, according to an embodiment of the disclosure.

The electronic device 100 according to an embodiment of the disclosure may obtain metadata information for a plurality of channels provided by a broadcast streaming application, a user's viewing history information of the plurality of channels provided by the broadcast streaming application, and the user's preferred channel information among the plurality of channels provided by the broadcast streaming application, and may input the obtained pieces of information into the recommendation model 201 to thereby output the channel group information.

According to an embodiment of the disclosure, the electronic device 100 may further input EPG data to the recommendation model 201 in order to obtain the channel group information.

According to an embodiment of the disclosure, the recommendation model 201 may be the same as the recommendation model described above with reference to FIGS. 1 through 4.

In the embodiment of FIG. 8, the recommendation model 201 may be an on-device AI that is trained and executed in the electronic device 100.

According to an embodiment of the disclosure, the electronic device 100 may update the recommendation model 201 by using feedback data received from the user. Details thereof will be described later with reference to FIGS. 9 through 11.

According to an embodiment of the disclosure, the electronic device 100 may provide the generated channel group to the user according to a method, such as by inserting the generated channel group into the menu of the broadcast streaming application.

According to an embodiment of the disclosure, the electronic device 100 may update the stored recommendation model 201 by obtaining a feedback with respect to the provided channel group from the user.

According to an embodiment of the disclosure, the electronic device 100 may also receive streaming data of each channel directly through a special receiver, such as a tuner or an HDMI, without receiving the streaming data of each channel from an external server through a network.

FIG. 9 is a diagram illustrating an example in which the electronic device 100 regenerates a channel group by reflecting a feedback of a user, according to an embodiment of the disclosure.

According to an embodiment of the disclosure, when a user executes a broadcast streaming application, the electronic device 100 may generate and provide a channel group by using the recommendation model 201 pre-trained based on, for example, metadata of a plurality of channels and user data.

According to an embodiment of the disclosure, the electronic device 100 may generate the channel group by operating the recommendation model 201, based on the feedback obtained from the user.

According to an embodiment of the disclosure, when the feedback obtained from the user with respect to the provided channel group is negative, the electronic device 100 may generate the channel group by operating the recommendation model 201.

For example, a case where the user directly requests re-generation of the channel group or a case where the user does not accept the generated channel group may correspond to a case where the feedback obtained from the user with respect to the provided channel group is negative.

According to an embodiment of the disclosure, in the case that the feedback obtained from the user with respect to the provided channel group is negative, the electronic device 100 may regenerate a channel group customized for the user by adjusting a weight for an input value of the recommendation model 201.

On the other hand, a case where a user continues to watch programs by using the generated channel group may not correspond to the case where the feedback obtained from the user with respect to the provided channel group is negative.

According to an embodiment of the disclosure, when a change in a channel number or channel ID requiring channel group regeneration is identified, the electronic device 100 may generate the channel group by operating the recommendation model 201.

According to an embodiment of the disclosure, a case where regeneration of the channel group is needed may be a case where a channel group has been generated based on a channel number assigned to each channel and then the channel number has changed or a case where when a channel group has been generated based on a channel ID assigned to each channel and then the channel ID has changed, as described above with reference to FIG. 4.

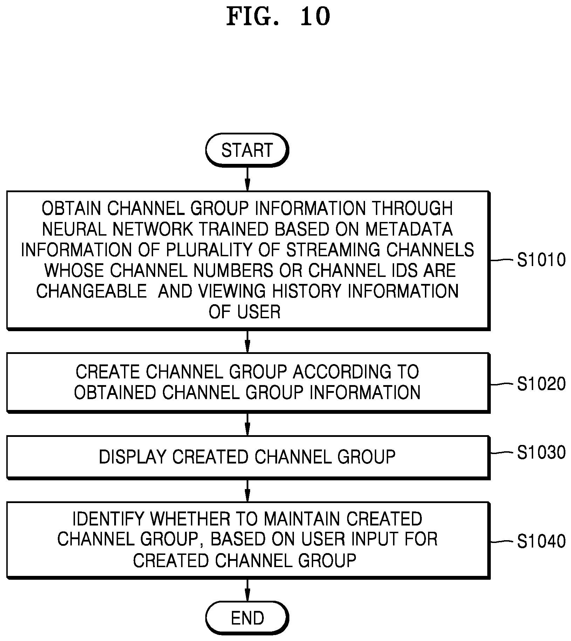

FIG. 10 is a flowchart of an operation method of the electronic device 100, according to an embodiment of the disclosure.

According to an embodiment of the disclosure, the electronic device 100 may obtain channel group information through a neural network trained based on metadata information for a plurality of streaming channels whose channel numbers or channel IDs are changeable and viewing history information of a user (operation S1010).

Operation S1010 of FIG. 10 may correspond to operation S410 of FIG. 4.

According to an embodiment of the disclosure, the electronic device 100 may generate a channel group according to the obtained channel group information (operation S1020).

Operation S1010 of FIG. 10 may correspond to operation S420 of FIG. 4.

Descriptions of operations S1010 and S1020 that are the same as given above with reference to FIG. 4 will not be repeated herein.

According to an embodiment of the disclosure, when the channel group is generated, the electronic device 100 may display the generated channel group (operation S1030).

According to an embodiment of the disclosure, when the channel group is generated or regenerated, the electronic device 100 may display the generated or regenerated channel group to the user. A method of performing the display may include various methods, such as a pop-up window or voice output.

According to an embodiment of the disclosure, the electronic device 100 may identify whether to maintain the generated channel group, based on a user input for the generated channel group (operation S1040).

According to an embodiment of the disclosure, when an acceptance input for the generated channel group is obtained from the user, the electronic device 100 may generate a new tab for accessing channel groups generated in a menu of an application, such as the customized group 301 of FIG. 3, and may enable access to the generated channel groups through a user input for the tab.

According to an embodiment of the disclosure, when a refusal input for the generated channel group is obtained from the user, the electronic device 100 may regenerate the channel group by adjusting weights of input values of the recommendation model 201 used to generate a channel group refused by the user. In this case, the electronic device 100 may update the recommendation model 201 by reflecting the adjusted weights of the input values.

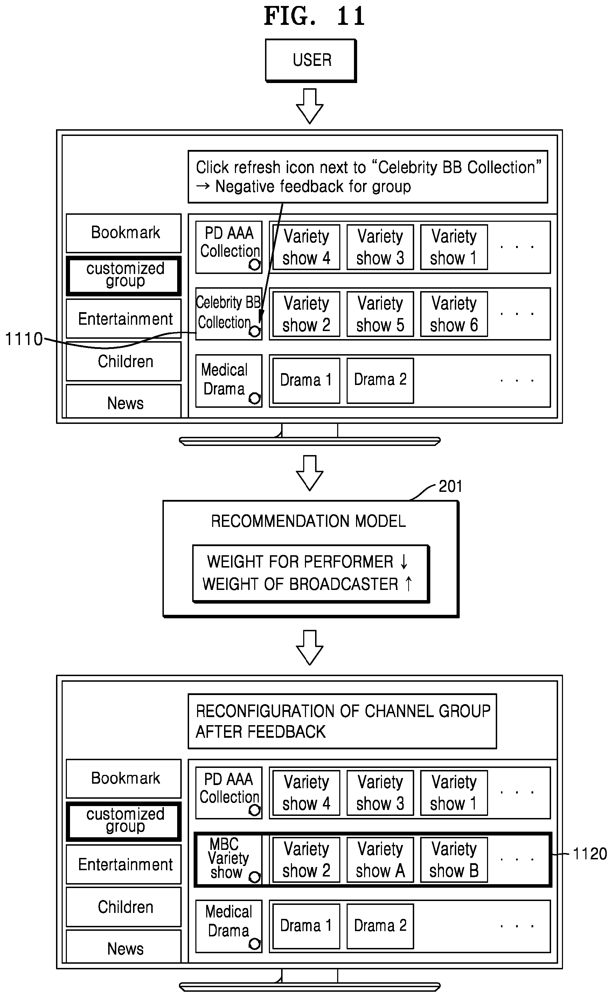

FIG. 11 is a diagram illustrating an example in which the electronic device 100 regenerates a channel group, based on a feedback of a user, according to an embodiment of the disclosure.

According to an embodiment of the disclosure, the electronic device 100 may generate a channel group and provide the channel group to a user.

In the embodiment of FIG. 11, the channel group may include a PD AAA collection, a celebrity BB collection 1110, and a medical drama.

When the user is satisfied with the channel group while using the channel group, the user may watch content while maintaining the content. However, when the user is not satisfied with the channel group, the user may request regeneration of the channel group.

In the embodiment of FIG. 11, the electronic device 100 may receive a refresh input for the celebrity BB collection 1110 of the channel group from the user. In detail, the electronic device 100 may receive, from the user, an input for a refresh icon displayed beside the celebrity BB collection 1110 of the channel group.

In the embodiment of FIG. 11, the electronic device 100 may identify the refresh input for the celebrity BB collection 1110 of the channel group obtained from the user as a negative feedback for the celebrity BB collection 1110 of the channel group.

According to an embodiment of the disclosure, when the negative feedback is obtained from the user, the electronic device 100 may regenerate a channel group for which the negative feedback has been obtained.

The electronic device 100 according to an embodiment of the disclosure may regenerate a channel group by adjusting the weights of input values used to generate the channel group for which the negative feedback has been obtained, and may update the recommendation model 201 by reflecting the adjusted weights of the input values.

Through this process, the electronic device 100 may upgrade the recommended model 201 to increasingly draw a satusfactory result for the user.

The electronic device 100 according to an embodiment of the disclosure may provide a channel group 1110 "Celebrity BB Collection" including, for example, Channel Variety 2, Channel Variety 5, and Channel Variety 6, to the user, and, when a negative feedback, i.e., a refresh input, is received from the user, may reduce the weight of an input value that was mainly used when generating a channel group 1110 "Celebrity BB Collection".

The "Celebrity BB Collection" may be a channel group that collects programs featuring celebrity BB.

Input values used when the electronic device 100 according to an embodiment of the disclosure generates the channel group "celebrity BB collection" may be a broadcaster, a performer, a genre, a content length, etc. When the electronic device 100 according to an embodiment of the disclosure receives a negative feedback, i.e., a refresh input, for the channel group "celebrity BB collection" from the user, the electronic device 100 may regenerate a channel group by lowering the weight of the performer, which is a main input value, and increasing the weight of the broadcaster, which is another input value, among the input values used when generating the channel group "celebrity BB collection".

For example, when the electronic device 100 initially generates the channel group "Celebrity BB Collection" with the overall weight set to 100, the electronic device 100 may have given a weight of 25 to the broadcaster, a weight of 40 to the performer, a weight of 15 to the genre, and a weight of 20 to the content length. The electronic device 100 may adjust a weight ratio for the input values of the recommendation model 201 by giving a weight of 30 to the broadcaster, a weight of 25 to the performer, a weight of 20 to the genre, and a weight of 25 to the content length after receiving a negative feedback from the user with respect to the channel group "Celebrity BB Collection".

The electronic device 100 according to an embodiment of the disclosure may produce a better result by decreasing a weight for an input value that had a significant influence on a result of "Celebrity BB Collection" that received a negative feedback and by increasing weights for the remaining input values. In this case, how much to adjust the weights may also be determined through learning.

The electronic device 100 according to an embodiment of the disclosure may continuously update the recommendation model 201 through this process to thereby increasingly produce a satisfactory result for the user.

The electronic device 100 according to an embodiment of the disclosure may regenerate a channel group 1120 "MBC Entertainment" instead of "Celebrity BB Collection" by adjusting the weights of the input values for the recommendation model 201. In the embodiment of FIG. 11, the "MBC Entertainment" channel group 1120 may include a "Variety Show 2" channel, a "Variety Show A" channel, and a "Variety Showt B" channel.

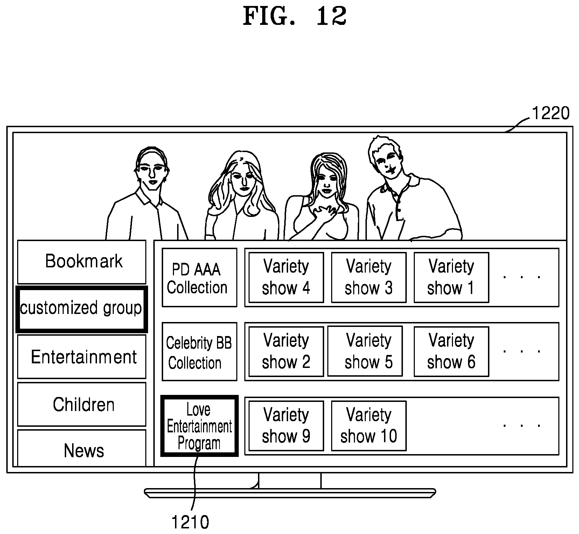

FIG. 12 is a diagram illustrating an example in which an electronic device provides an advertisement in a streaming application, according to an embodiment of the disclosure.

The electronic device 100 according to an embodiment of the disclosure may stream a channel selected according to a user input of selecting one from the channels included in a generated channel group.

The electronic device 100 according to an embodiment of the disclosure may provide an advertisement, based on the characteristics of a channel group selected by the user from among generated channel groups.

The electronic device 100 according to an embodiment of the disclosure may periodically provide advertisements, based on the characteristics of the channel group selected by the user from among the generated channel groups. In this case, the electronic device 100 may maximize an advertising effect by inserting a customized advertisement according to the characteristics of each channel group.

For example, in the embodiment of FIG. 12, when a channel group "Love Entertainment Program" 1210 is selected, the electronic device 100 may provide an advertisement for a matchmaking company in an advertisement area 1220. The channel groups are generated by reflecting the user's preferences, and provision of an advertisement conforming to the characteristics of a channel group currently selected by the user among the channel groups may maximize the advertising effect on the user.

FIG. 13 is a block diagram of the electronic device 100 according to an embodiment of the disclosure.

Referring to FIG. 13, the electronic device 100 may include the processor 110 and the memory 120.

The memory 120 may store a program for processing and controlling by the processor 110. The memory 120 may store data that is input to the electronic device 100 or output from the electronic device 100.

The memory 120 may include at least one selected from an internal memory (not shown) and an external memory (not shown).

The memory 120 may include at least one type of storage medium selected from among a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, and an optical disk.

The internal memory may include, for example, at least one selected from volatile memory (for example, dynamic RAM (DRAM), static RAM (SRAM), or synchronous dynamic RAM (SDRAM)), non-volatile memory (for example, one time programmable ROM (OTPROM), programmable ROM (PROM), erasable and programmable ROM (EPROM), electrically erasable and programmable ROM (EEPROM), mask ROM, or flash ROM), a hard disk drive (HDD), and a solid state drive (SSD).

According to an embodiment of the disclosure, the processor 110 may load a command or data received from at least one of the non-volatile memory or another element into the volatile memory and process the command or the data. The processor 110 may store data received or generated from another element in the nonvolatile memory.

The external memory may include, for example, at least one selected from Compact Flash (CF), Secure Digital (SD), Micro-SD, Mini-SD, extreme Digital (xD) and Memory Stick.

The memory 120 may store one or more instructions executable by the processor 110.

According to an embodiment of the disclosure, the memory 120 may store various types of information than are received through an input/output interface (not shown).

According to an embodiment of the disclosure, at least one of instructions, an algorithm, a data structure, program code, or an application program readable by the processor 110 may be stored in the memory 120. The instructions, algorithm, data structure, and program code stored in the memory 120 may be implemented in, for example, programming or scripting languages such as C, C++, Java, assembler, and the like.

According to an embodiment of the disclosure, the memory 120 may store instructions for controlling the processor 110 to obtain channel group information through a neural network trained based on metadata information for a plurality of streaming channels in which channel numbers or channel IDs are changed and viewing history information of a user, generate a channel group according to the obtained channel group information, and update the generated channel group when at least one of a channel number or channel ID for at least one channel included in the generated channel group is changed.

When there is an input of a user or stored preset conditions are satisfied, the processor 110 may execute an operating system (OS) and various applications that are stored in the memory 120.

The processor 110 may include random-access memory (RAM) that stores a signal or data input by an external source of the electronic device 100 or is used as a memory area for various operations performed by the electronic device 100, and read-only memory (ROM) that stores a control program for controlling the electronic device 100.

The processor 110 may include a single core, a dual core, a triple core, a quad core, or a multiple core thereof. The processor 110 may include a plurality of processors. For example, the processor 110 may be implemented by using a main processor and a sub-processor operating in a sleep mode.

The processor 110 may include at least one of a central processing unit (CPU), a graphics processing unit (GPU), or a video processing unit (VPU). Alternatively, according to embodiments, the processor 110 may be implemented in the form of a system on chip (SOC) that integrates at least one of a CPU, a GPU, or a VPU.

The processor 110 may control the various components of electronic device 100 by executing the one or more programs stored in the memory 120.

According to an embodiment of the disclosure the processor 110 may obtain channel group information through a neural network trained based on the metadata information about the plurality of streaming channels whose channel numbers or channel IDs are changed and the viewing history information of the user.

According to an embodiment of the disclosure, the processor 110 may generate a channel group according to the obtained channel group information.

According to an embodiment of the disclosure, when a channel number or channel ID for at least one channel included in the generated channel group is changed, the processor 110 may update the generated channel group.

According to an embodiment of the disclosure, the processor 110 may execute the one or more instructions to control display of the generated channel group to the user and obtain of an acceptance or rejection input for the generated channel group from the user.

According to an embodiment of the disclosure, the processor 110 may execute the one or more instructions to control streaming of a channel selected according to a user input of selecting one from among the channels included in the generated channel group, and periodical provision of advertisements based on the characteristics of the channel group including the selected channel.

According to an embodiment of the disclosure, the processor 110 may execute the one or more instructions to control obtainment of information about a program to be streamed next to each program currently being streamed on the plurality of streaming channels by using EPG data and identification as to whether channel numbers or channel IDs assigned to the plurality of streaming channels have been changed via a comparison between characteristics of the each program currently being streamed and characteristics of the program to be streamed next to the each program.

According to an embodiment of the disclosure, the processor 110 may execute the one or more instructions to control obtainment of a regeneration request for at least one of the generated channel groups from the user, regeneration of a channel group via adjustment of the weights of input values used to generate the channel group for which regeneration is requested, and updating of the neural network by reflecting the adjusted weights of the input values.

According to an embodiment of the disclosure, the processor 110 may transmit a video signal or audio signal transmitted by the electronic device 100 to an external display so that the video signal or audio signal may be output to the external display.

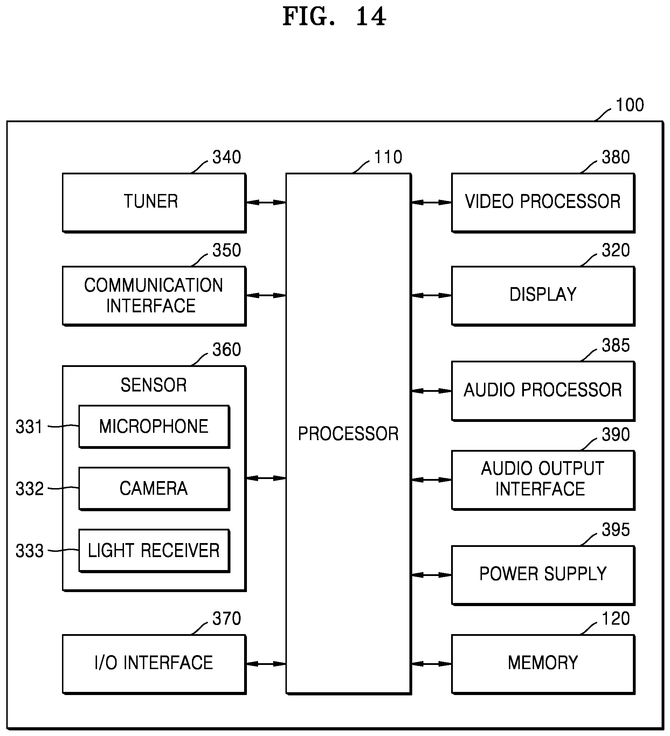

FIG. 14 is a block diagram for explaining the configuration of the electronic device 100 according to an embodiment of the disclosure in detail.

Referring to FIG. 14, the electronic device 100 may include a tuner 340, a processor 110, a display 320 a communication interface 350, a sensor 360, an input/output (I/O) interface 370, a video processor 380, an audio processor 385, an audio output interface 390, a memory 120, and a power supply 395.

The processor 110 of FIG. 14 corresponds to the processor 110 of FIG. 13, and the memory 120 of FIG. 14 corresponds to the memory 120 of FIG. 13. Descriptions of FIG. 14 that are the same as given above will not be repeated herein.

The communication interface 350 according to an embodiment of the disclosure may include a Wi-Fi module, a Bluetooth module, an infrared communication module, a wireless communication module, a LAN module, an Ethernet module, a wired communication module, and the like. Each of these communication module may be implemented in the form of at least one hardware chip.

The Wi-Fi module and the Bluetooth module may perform communication according to a Wi-Fi method and a Bluetooth method, respectively. When using a Wi-Fi module or a Bluetooth module, the communication interface 350 may first transmit or receive various types of connection information, such as a service set ID (SSID) and a session key, connect with various external devices by using the various types of connection information, and then transmit or receive various pieces of information. The wireless communication module may include at least one communication chip that performs communication according to various wireless communication standards, such as Zigbee, 3^{rd} Generation (3G), 3^{rd} Generation Partnership Project (3GPP), Long Term Evolution (LTE), LTE Advanced (LTE-A), 4^{th} Generation (4G), and 5^{th} Generation (5G).

The communication interface 350 according to an embodiment of the disclosure may receive a user input from an external device.

The communication interface 350 according to an embodiment of the disclosure may communicate with the external device, such as a server.

The communication interface 350 according to an embodiment of the disclosure may include a communication interface that performs wireless communication with a server, etc., such as Bluetooth (BT), and a communication interface that is connected to an external device through an HDMI port, etc. In this case, the communication interface that performs wireless communication with the server, etc., such as BT, may perform connection with other devices and transmission of video/audio data. The communication section that is connected to an external device through an HDMI port, etc, may include not only an input port for receiving an input, but also an output port, such as a DP, an HDMI, an RGB, a DVI, or Thunderbolt, for transmitting a video or audio signal to an external display or a speaker.

The tuner 340 according to an embodiment of the disclosure may tune and select only a frequency of a channel which the electronic device 100 wants to receive from among many radio wave components via amplification, mixing, resonance, or the like of a wired or wireless broadcasting signal. The broadcasting signal includes audio, video, and additional information (for example, an EPG).

The tuner 340 may receive a broadcasting signal from various sources, such as terrestrial broadcasting, cable broadcasting, satellite broadcasting, and Internet broadcasting. The tuner 340 may also receive a broadcasting signal from a source such as analog broadcasting or digital broadcasting.

The sensor 130 may sense a voice of the surroundings of the electronic device 100, an image of the surroundings of the electronic device 100, or an interaction with the surroundings of the electronic device 100, and may include at least one of a microphone 331, a camera 332, or a light receiver 333. The sensor 130 may sense a state of the electronic device 100 or a state of the surrounding of the electronic device 100 and may transmit information corresponding to the sensed state to the processor 110.

The microphone 331 receives an uttered voice of a user and a voice generated from the surrounding of the electronic device 100. The microphone 331 may transform the received voice into an electrical signal and output the electrical signal to the processor 110. The microphone 331 may use various noise removal algorithms in order to remove noise that is generated while receiving an external audio signal.

The camera 332 may obtain an image frame, such as a still image or a moving picture. An image captured via the image sensor may be processed by the processor 110 or a separate image processor (not shown).

The image frame obtained by the camera 332 may be stored in the memory 120 or transmitted to the outside via the communication interface 350. At least two cameras 332 may be included according to embodiments of the electronic device 100.

The light receiver 333 receives an optical signal (including a control signal) from an external remote control device (not shown). The light receiver 333 may receive an optical signal corresponding to a user input (for example, touch, pressing, a touch gesture, a voice, or a motion) from the remote control device (not shown). A control signal may be extracted from the received optical signal under the control by the processor 110. For example, the light receiver 333 may receive a control signal corresponding to a channel up/down button for channel switching from the remote control device (not shown).

The sensor 130 is illustrated as including the microphone 331, the camera 332, and the light receiver 333, but is not limited thereto, and may include at least one selected from a magnetic sensor, an acceleration sensor, a temperature/humidity sensor, an infrared sensor, a gyroscope sensor, a position sensor (e.g., a global positioning system (GPS)), a pressure sensor, a proximity sensor, an RGB sensor, an illuminance sensor, or a Wi-Fi signal receiver. Functions of most of the sensors would be instinctively understood by one of ordinary skill in the art in view of their names and thus detailed descriptions thereof will be omitted herein.

The sensor 130 is illustrated as being included in the electronic device 100, but is not limited thereto, and may be included in a control device that is located independently of the electronic device 100 and communicates with the electronic device 100, such as a remote controller. When the sensor 130 is included in a control device of the electronic device 100, the control device may digitize information sensed by the sensor 130 and transmit the digitized information to the electronic device 100. The control device may communicate with the electronic device 100 via short-range communication including infrared, Wi-Fi, or Bluetooth.

For example, a microphone may be included in the electronic device 100, but may be included in a control device that is located independently of the electronic device 100 and communicates with the electronic device 100, such as a remote controller.

According to an embodiment of the disclosure, when a microphone is included in a remote controller, an analog audio signal may be received through the microphone, and the remote controller may digitize the analog audio signal and transmit the digitized analog audio signal to the electronic device 100, such as a TV. In this case, the remote controller may communicate with the advertisement target determining device 100 via short-range communication including infrared, Wi-Fi, Bluetooth, or BT.

According to an embodiment of the disclosure, the electronic device 100 may include a plurality of communication interfaces 350 capable of various short-range communications including infrared, Wi-Fi, or Bluetooth.

According to an embodiment of the disclosure, the electronic device 100 may include a plurality of communication interfaces 350 in which a communication interface communicating with the server 200 and a communication interface communicating with a remote controller are different from each other. For example, the communication interface that communicates with the server 200 may be a communication interface that uses an Ethernet modem, a Wi-Fi module, or the like, while the communication interface that communicates with a remote controller may be a communication interface that uses a BT module.

According to an embodiment of the disclosure, the electronic device 100 may include a communication interface 350 in which a communication interface communicating with the server 200 and a communication interface communicating with a remote controller are the same as each other. For example, the communication interface that communicates with the server 200 and the communication interface that communicates with the remote controller may be both communication interfaces that use a WiFi module.

According to an embodiment of the disclosure, a device, such as a smartphone, in which a remote control application is provided may perform the same role as the aforementioned remote controller. In other words, the device in which a remote control application is provided may control the electronic device 100, and may perform a voice recognition function.

The device in which a remote control application may be provided may be any device capable of providing and operating an application, such as an Al speaker, other than a smartphone.

According to an embodiment of the disclosure, the device in which a remote control application is provided may perform user voice reception.

According to an embodiment of the disclosure, the electronic device 100 may transmit and receive data to and from the device on which the remote control or remote control application may be installed, by using Wi-Fi, BT, or infrared, etc., and may include a plurality of communication interfaces capable of implementing the above-described communication method so that the device on which the remote control or a remote control application may be installed may be controlled.

The I/O interface 370 receives video (for example, a moving picture), audio (for example, a voice or music), and additional information (for example, an EPG) from outside the electronic device 100 under the control by the processor 110. The I/O interface 370 may include a High-Definition Multimedia Interface (HDMI), a Mobile High-Definition Link (MHL), a Universal Serial Bus (USB), a Display Port (DP), a Thunderbolt, a Video Graphics Array (VGA) port, an RGB port, a D-subminiature (D-SUB), a Digital Visual Interface (DVI), a component jack, or a PC port.

The video processor 380 processes video data that is received by the electronic device 100. The video processor 380 may perform a variety of image processing, such as decoding, scaling, noise removal, frame rate transformation, and resolution transformation, on the received video data.

The display 320 generates a driving signal by converting an image signal, a data signal, an on-screen display (OSD) signal, and a control signal that are processed by the processor 110. The display 320 may be a plasma display panel (PDP), a liquidcrystal display (LCD), an organic light-emitting device (OLED), a flexible display, or a 3-dimensional (3D) display. The display 320 may be configured as a touch screen, and thus may serve as an input device as well as an output device.

The display 320 may output various contents that are input via the communication interface (not shown) or the I/O interface 370, or may output an image stored in the memory 120. The display 320 may also output, to a screen, information input by the user through the I/O interface 370.

The display 320 may include a display panel. The display panel may be a liquid crystal display (LCD) panel or a panel including various illuminators such as a light emitting diode (LED), an organic light emitting diode (OLED), and a cold cathode fluorescent lamp (CCFL). The display panel may include not only a flat display device but also a curved display device having a curvature or a flexible display device capable of adjusting a curvature. The display panel may be a 3D display or an electrophoretic display.

An output resolution of the display panel may be, for example, a high definition (HD), a full HD, an ultra HD, or a resolution that is clearer than an ultra HD.

In the embodiment of FIG. 14, the electronic device 100 is illustrated as including a display, but is not limited thereto. The electronic device 100 may be configured to transmit a video/audio signal to a separate display device including a display by being connected to the separate display device via wire/wireless communication.

According to an embodiment of the disclosure, the electronic device 100 may be implemented in a form that operates by being connected to an external display even when the electronic device 100 does not have a display.

For example, the electronic device 100 may be implemented as a type that outputs an image to a separate external display via a video or audio output port, without a display, like an STB, or with a simple display for notifications, etc.

In this case, the electronic device 100 may include an output port for outputting a video or audio signal to a display. The output port may be of a type capable of transmitting a video signal and an audio signal simultaneously, such as an HDMI, a DP, or a thunderbolt, or may be of a type having separate ports that transmit a video signal and an audio signal separately.

According to an embodiment of the disclosure, the electronic device 100 may transmit a video or audio signal via wired or wireless communication.

The audio processor 385 processes audio data. The audio processor 385 may perform a variety of processing, such as decoding, amplification, or noise removal, on the audio data. The audio processor 385 may include a plurality of audio processing modules to process audios corresponding to a plurality of pieces of content.

The audio output interface 390 outputs audio included in a broadcasting signal received via the tuner 340, under a control by the processor 110. The audio output interface 390 may output audio (for example, a voice or a sound) that is input via the communication interface 350 or the I/O interface 370. The audio output interface 390 may also output audio stored in the memory 120 under a control by the processor 110. The audio output interface 390 may include at least one of a speaker, a headphone output port, or a Sony/Philips Digital Interface (S/PDIF) output port.

The power supply 395 supplies power that is input from an external power source, to the internal components of the electronic device 100, under the control of the processor 110. The power supply 395 may also supply power that is output by one or more batteries (not shown) located in the electronic device 100, to the internal components of the electronic device 100, under the control by the processor 110.

The memory 120 may store various data, programs, or applications for driving and controlling the electronic device 100 under a control by the processor 110. The memory 120 may include a broadcasting receiving module, a channel control module, a volume control module, a communication control module, a voice recognition module, a motion recognition module, a light receiving module, a display control module, an audio control module, an external input control module, a power control module, a power control module of a wirelessly (for example, Bluetooth) connected external device, a voice database (DB), or a motion DB, which are not shown. These modules and the DBs of the memory 120, which are not shown, may be implemented as software in order to perform a broadcasting reception control function, a channel control function, a volume control function, a communication control function, a voice recognition function, a motion recognition function, a light receiving control function, a display control function, an audio control function, an external input control function, a power control function, or a power control function of the wirelessly (for example, Bluetooth) connected external device in the electronic device 100. The processor 110 may perform these functions by using the software stored in the memory 120.

The processor 110 is illustrated as a single element in FIG. 14, but embodiments of the disclosure are not limited thereto. According to an embodiment, the processor 110 may be provided as one or in plurality.

According to an embodiment of the disclosure, the processor 110 may be configured as a dedicated hardware chip that performs artificial intelligence (AI) learning.

A module included in the memory 120 denotes a unit processing a function or operation performed by the processor 110, and may be implemented as software, such as instructions, algorithm, data structure, or program code.

The block diagrams of the electronic device 100 shown in FIGS. 13 and 14 are only exemplary embodiments. Components illustrated in FIGS. 13 and 14 may be combined or omitted according to the specifications of the electronic device 100 when being actually implemented, or additional components may be included in the block diagrams of FIGS. 13 and 14. In other words, two or more components may be combined into a single component, or a single component may be divided into two or more components. A function performed in each block is merely an example to explain embodiments.

An operation method of the electronic device 100 according to an embodiment of the disclosure can be embodied as a computer-readable medium including instruction codes executable by a computer such as a program module executed by the computer. Computer-readable recording medium may be any available media accessible by a computer and includes both volatile and nonvolatile media and removable and nonremovable media. The computer-readable recording medium may include program commands, data files, data structures, and the like separately or in combinations. The program commands to be recorded on the computer-readable recording medium may be specially designed and configured for the present disclosure or may be well-known to and usable by one of ordinary skill in the art of computer software. Examples of the computer-readable recordingmedium include a magnetic medium such as a hard disk, a floppy disk, or a magnetic tape, an optical medium such as a compact disk-read-only memory (CD-ROM) or a digital versatile disk (DVD), a magneto-optical medium such as a floptical disk, and a hardware device specially configured to store and execute program commands such as a ROM, a random-access memory (RAM), or a flash memory. Examples of the program commands may include advanced language codes that can be executed by a computer by using an interpreter or the like as well as machine language codes made by a compiler.

According to an embodiment of the disclosure, a method according to various disclosed embodiments may be provided by being included in a computer program product. The computer program product, which is a commodity, may be traded between sellers and buyers. Computer program products are distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

The above embodiments should be understood not to be restrictive but to be illustrative, in all aspects. For example, each component described as a single type may be implemented in a distributed manner, and similarly, components described as being distributed may be implemented in a combined form.

A method of operating an electronic device, according to an embodiment of the disclosure may include obtaining channel group information customized for a user through a neural network trained based on metadata information for a plurality of streaming channels whose channel numbers or channel identifiers (IDs) are changeable and viewing history information of the user, generating a channel group customized for the user according to the obtained channel group information, and updating the generated channel group when a change in channel numbers or channel IDs for channels included in the generated channel group is identified.

The neural network is trained based on the metadata information for the plurality of streaming channels, the viewing history information of the user, and preferred channel information of the user, and outputs channel group information customized for the user.

The method of operating an electronic device may further include displaying the generated channel group to the user, and obtaining an acceptance or rejection input for the generated channel group from the user.

The channel group customized for the user may be generated based on the channel ID assigned to each of the channels or based on the channel number assigned to each of the channels.

The method of operating an electronic device may further include streaming a selected channel according to a user input of selecting one from among the channels included in the generated channel group, and periodically providing advertisements based on the characteristics of the channel group including the selected channel.

The method of operating an electronic device may further include obtaining information about a program to be streamed next to each program currently being streamed on the plurality of streaming channels by using EPG data and identifying whether channel numbers or channel IDs assigned to the plurality of streaming channels have been changed via a comparison between characteristics of the each program currently being streamed and characteristics of the program to be streamed next to the each program.

The method of operating an electronic device may further include obtaining a regeneration request for at least one of the generated channel groups from the user, regenerating a channel group via adjustment of the weights of input values used to generate the channel group for which regeneration is requested, and updating of the neural network through reflection of the adjusted weights of the input values.

The metadata information for the plurality of streaming channels may include at least one of broadcaster information, performer information, genre information, or information about the length of content.

The updating of the generated channel group may include updating the generated channel group by using the neural network, when the generated channel group is generated based on the channel ID assigned to each of the channels and a change in the channel ID is identified or when the generated channel group is generated based on the channel number assigned to each of the channels and a change in the channel number is identified.

The viewing history information of the user may include information about a viewing time period for the plurality of streaming channels, and viewing information indicating that the viewing time period is less than a preset time period may be deleted from the viewing history information of the user.

An electronic device according to an embodiment of the disclosure includes a memory storing one or more instructions, and one or more processors configured to execute the one or more instructions stored in the memory. The one or more processors are configured to execute the one or more instructions to obtain channel group information customized for a user through a neural network trained based on metadata information for a plurality of streaming channels whose channel numbers or channel identifiers (IDs) are changeable and viewing history information of the user, generate a channel group customized for the user according to the obtained channel group information, and update the generated channel group when a change in channel numbers or channel IDs for channels included in the generated channel group is identified.

The neural network may be trained based on the metadata information for the plurality of streaming channels, the viewing history information of the user, and preferred channel information of the user, and may output channel group information customized for the user.

The one or more processors may execute the one or more instructions to control display of the generated channel group to the user and obtainment of an acceptance or rejection input for the generated channel group from the user.

The channel group customized for the user may be generated based on the channel ID assigned to each of the channels or based on the channel number assigned to each of the channels.

The one or more processors may execute the one or more instructions to control streaming of a channel selected according to a user input of selecting one from among the channels included in the generated channel group, and periodical provision of advertisements based on the characteristics of the channel group including the selected channel.

The one or more processors may execute the one or more instructions to control obtainment of information about a program to be streamed next to each program currently being streamed on the plurality of streaming channels by using EPG data and identification as to whether channel numbers or channel IDs assigned to the plurality of streaming channels have been changed via a comparison between characteristics of the each program currently being streamed and characteristics of the program to be streamed next to the each program.

The one or more processors may execute the one or more instructions to control obtainment of a regeneration request for at least one of the generated channel groups from the user, regeneration of a channel group via adjustment of the weights of input values used to generate the channel group for which regeneration is requested, and updating of the neural network by reflecting the adjusted weights of the input values.

The metadata information for the plurality of streaming channels may include at least one of broadcaster information, performer information, genre information, or information about the length of content.

The one or more processors may execute the one or more instructions to update the generated channel group by using the neural network, when the generated channel group is generated based on the channel ID assigned to each of the channels and a change in the channel ID is identified or when the generated channel group is generated based on the channel number assigned to each of the channels and a change in the channel number is identified.

Provided may be a non-transitory computer-readable recording medium having recorded thereon a computer program, which, when executed by a computer, performs the method of operating an electronic device.

A system including an electronic device and a server according to an embodiment of the disclosure may be provided.

A server according to an embodiment of the disclosure may be provided.

## Claims

1. A method of operating an electronic device, the method comprising:
obtaining (S410) channel group information through a neural network trained on metadata information for a plurality of streaming channels whose channel numbers or channel identifiers, IDs, are changeable and viewing history information;
generating (S420) a channel group according to the obtained channel group information; and
updating (S430) the generated channel group when at least one of a channel number or a channel ID for at least one channel included in the generated channel group is changed.

2. The method of claim 1, wherein the neural network is trained to output channel group information corresponding to a user, based on the metadata information for the plurality of streaming channels, the viewing history information, and preferred channel information.

3. The method of any one of claims 1 and 2, further comprising:
displaying (S1030) the generated channel group; and
in response to a user input for the generated channel group, identifying (S1040) whether to maintain the generated channel group.

4. The method of any one of claims 1 to 3, wherein the generated channel group is generated based on the channel ID assigned to each of the plurality of streaming channels or based on the channel number assigned to each of the plurality of streaming channels.

5. The method of any one of claims 1 to 4, further comprising:
streaming a selected channel according to a user input selecting one of the plurality of streaming channels included in the generated channel group; and
providing an advertisement, based on characteristics of a said channel group including the selected channel.

6. The method of any one of claims 1 to 5, further comprising:
obtaining information about a next program to be streamed after each program currently being streamed on the plurality of streaming channels, based on electronic program guide, EPG, data; and
identifying whether channel numbers or channel IDs assigned to the plurality of streaming channels have changed based on the each program currently being streamed and the next program to be streamed.

7. The method of any one of claims 1 to 6, further comprising:
receiving a user input requesting regeneration of the generated channel group;
regenerating a channel group by adjusting weights of input values on which the channel group requested to be regenerated is generated; and
updating the neural network, based on the adjusted weights.

8. The method of any one of claims 1 to 7, wherein the metadata information for the plurality of streaming channels includes at least one of broadcaster information, performer information, genre information, or information about a length of content.

9. The method of any one of claims 1 to 7, wherein the updating of the generated channel group comprises updating the generated channel group by using the neural network, when a change in the channel ID assigned to each of the plurality of streaming channels, based on which the generated channel group is generated, is identified, or when a change in the channel number assigned to each of the plurality of streaming channels, based on which the generated channel group is generated, is identified.

10. The method of any one of claims 1 to 9, wherein the viewing history information includes information about a viewing time period indicating that a viewing time period for the plurality of streaming channels is greater than or equal to a preset value.

11. An electronic device comprising:
a memory (120) storing one or more instructions; and
one or more processors (110) configured to execute the one or more instructions stored in the memory, wherein the one or more processors are configured to execute the one or more instructions to:
obtain channel group information through a neural network trained on metadata information for a plurality of streaming channels whose channel numbers or channel identifiers, IDs, are changeable and viewing history information;
generate a channel group according to the obtained channel group information; and
update the generated channel group, when at least one of a channel number or a channel ID for at least one channel included in the generated channel group is changed.

12. The electronic device of claim 11, wherein the neural network is trained to output channel group information corresponding to a user, based on the metadata information for the plurality of streaming channels, the viewing history information, and preferred channel information.

13. The electronic device of any one of claims 11 and 12, wherein the one or more processors (110) are configured to execute the one or more instructions to:
display the generated channel group; and
in response to a user input for the generated channel group, identify whether to maintain the generated channel group.

14. The electronic device of any one of claims 11 to 13, wherein the channel group is generated based on the channel ID assigned to each of the channels or based on the channel number assigned to each of the channels.

15. A computer-readable recording medium having recorded thereon a computer program, which, when executed by a computer, performs the method of one of claims 1 to 10.
